# EUROPÄISCHE PATENTSCHRIFT

(11) **EP 0 414 246 B1**
(45) Veröffentlichungstag und Bekanntmachung des Hinweises auf die Patenterteilung: **01.06.1994**
(21) Anmeldenummer: 90116176.0
(22) Anmeldetag: 23.08.1990
(51) Int. Cl.: G09B 9/00

(54) **Simulationsanlage für stationäre und mobile Sprechfunknetze**
Simulation-device for stationary and mobile radiotelephone networks
Dispositif de simulation pour réseaux radiotéléphoniques stationaires ou mobiles

(30) Priorität: 25.08.1989 DE 3928093
(43) Veröffentlichungstag der Anmeldung: 27.02.1991
(73) Patentinhaber: INDUSTRIEANLAGEN-BETRIEBSGESELLSCHAFT M.B.H., D-85521 Ottobrunn (DE)
(72) Erfinder: Knippschild, Michael, D-3470 Höxter (DE)
(74) Vertreter: Bohnenberger, Johannes, Dr.

(56) Entgegenhaltungen:
- EP-A- 0 205 663
- DE-A- 3 418 245
- DE-A- 3 543 413
- SOVIET INVENTIONS ILLUSTRATED Sektion Mechanik& Allgemeines, Woche 8521, 4. Juli 1985, Zusammenfassung Nr.85127129 P/85, Derwent Publications Ltd, London, GB; & SU-A-1121696 (IVANOV) 30.10.1984
- PATENT ABSTRACTS OF JAPAN Band 8, Nr. 268 (E-283), 7.Dezember 1984; & JP - A - 59138132 (MITSUBISHI) 08.08.1984

## Beschreibung

Die Erfindung betrifft eine Simulationsanlage für stationäre und mobile Sprechfunknetze, wie sie zur Einsatzführung z. B. bei Polizei-, Feuerwehr- oder Rettungsdiensten sowie im militärischen Bereich vewendet werden.

Bekanntlich sind technische Geräte nur so gut wie die Personen, von denen sie bedient werden. Aus diesem Grund ist es notwendig, das Bedienungspersonal von Kommunikationsgeräten intensiv und wirklichkeitsnah auszubilden. Aus Kostengründen ist die Ausbildung an realen Geräten nicht im erwünschten Umfang möglich und bindet auch Material, das im Einsatz benötigt wird.

Aus der DE-A-35 43 413 ist eine Simulationsanlage dieser Art bekannt, die zum Simulieren des Sprechfunkverkehrs im Simplex- und Duplex-Betrieb dienen soll. Bei der bekannten Simulationsanlage dreht es sich um das Simulieren des Sprechfunkverkehrs für die Rheinfunk- und Seefunkdienste zwischen einer ortsfesten Hauptstelle und beweglichen Einzelstationen. Die Hauptstelle kann zwar mit allen Einzelstationen kommunizieren, im Duplexverkehr jedoch nur nacheinander. Die Möglichkeit, neben gezielten Einzelverbindungen auch gleichzeitig mit mehreren, in wechselnder Zusammensetzung wählbaren Gruppen von Einzelstationen sowie mit allen Einzelstationen gleichzeitig zu kommunizieren, ist bei der bekannten Simulationsanlage nicht vorgesehen. Auch weitere Möglichkeiten, welche der Realität entsprechen, sind bei der bekannten Simulationsanlage nicht möglich, so z. B. die Möglichkeit, gleichzeitig zu senden und zu empfangen oder die Möglichkeit, die Kommunikationseinrichtungen innerhalb einzelner Übungsstände zur Informationsübertragung zu verwenden.

Die Einzelstationen der bekannten Simulationsanlage können untereinander nur im Simplex-Betrieb kommunizieren, wobei die Hauptstelle nicht beteiligt ist. Schließlich ist auch die Erweiterung der bekannten Simulationsanlage äußerst schwierig, so daß reale Situationen, welche größere Netze umfassen, nicht simulierbar sind. Auch ist es nicht möglich, mit der bekannten Simulationsanlage den Betrieb unter erschwerten Bedingungen (Störungen im Informationsfluß) zu üben und die Übungsergebnisse zu quantifizieren.

Aus der EP-A 205 663 ist eine Simulationsanlage bekannt, mittels derer der Funkverkehr zwischen zwei Funkstationen unter Verwendung von Kunstantennen und Dämpfungsgliedern simuliert werden soll. Bei dieser Anlage ist die Einkopplung von Störungen zur Simulierung einer elektromagnetischsen Umgebung möglich. Bei dieser bekannten Anlage werden die Strukturen realer Netze allerdings nicht berücksichtigt.

Weiterhin sind Telefon-Konferenzschaltungen bekannt, die momentan eine Verbindung von maximal 12 Teilnehmern ermöglichen. Hierbei kann nur ein Kreis mit mehr als 2 Teilnehmern aufgebaut werden. Ein gleichzeitiges Abhören von zwei Kanälen bzw. ein wechselweises Sprechen und Hören auf je einem der beiden Kanäle, wie es beispielsweise bei einem militärischen Übungsstand bzw. Gefechtsfahrzeug erfolgt, ist mit der herkömmlichen Telefontechnik nicht darstellbar. Es sind zwar mehrere Sprechgarnituren an einer Nebenstelle anschließbar, mittels derer ein Bordnetz simulierbar wäre, jedoch sind die Gespräche an diesen Sprechgarnituren (Gespräche der Besatzung eines Fahrzeuges) untereinander auch von außen mitzuhören. Schließlich ist auch mit der verfügbaren Telefontechnik der gleichzeitige Verbindungsaufbau von einer zentralen Leitstelle zu beliebig vielen Teilnehmern nicht möglich. Vielmehr muß jeder Teilnehmer die Punkt-Zu-Punkt-Verbindung selbst aufbauen und unterbrechen. Somit ist keine Steuerungsmöglichkeit durch einen Leitstand gegeben.

Der Erfindung liegt die Aufgabe zugrunde, eine Simulationsanlage der eingangs genannten Art dahingehend weiterzubilden, daß eine realitätsnahe Ausbildung und quantifizierbare Ausbildungsergebnisse sichergestellt sind.

Diese Aufgabe wird durch eine Simulationsanlage für stationäre und mobile Sprechfunknetze gelöst, welche mindestens einen Leitstand, der mit mindestens einer Hör-/Sprechgarnitur ausgebildet ist, mindestens einen Übungsstand, der mit mindestens einer Hör-/Sprechgarnitur ausgerüstet ist, Informationsübertragungs-Einrichtungen zum Übertragen von Informationen zwischen Übungsständen und dem Leitstand und Überwachungseinrichtungen aufweist, zur Überwachung des Informationsflusses durch die Informations- und Übertragungseinrichtungen.

Ein zentraler Punkt der erfindungsgemäßen Simulationsanlage liegt darin, daß die Informationsübertragungs-Einrichtungen mit dem Leitstand sowie mit allen Übungsständen verbunden sind, so daß eine Kommunikation zwischen allen Teilnehmern stattfinden kann. Die Überwachungseinrichtungen wiederum sind mit den Informationsübertragungs-Einrichtungen derart verbunden, daß der Informationsfluß (ständig) überwacht werden kann.

Besonders vorteilhaft ist die Ausbildung der Informationsübertragungs-Einrichtungen als Busleitung mit n Kanälen, wobei der Leitstand auf jeden der Kanäle zugreifen kann, wahrend die Übungsstände nur auf einen Teil der Kanäle zugreifen können. Dadurch ist eine im wesentlichen beliebige Erweiterung (durch Erhöhung der Kanalzahl) möglich, ohne daß hierdurch ein überhöhter Aufwand (wie bei einem Stern-Netz) getrieben werden müßte.

Vorzugsweise ist ein Rechner vorgesehen, der mit der Busleitung verbunden und so ausgebildet ist, daß durch ihn eine Zuweisung von Kanalen zu Übungsständen möglich ist. Weiterhin erfolgt vorzugsweise eine Einkopplung von Störungen bishin zur Simulation von Ausfallzuständen durch den Rechner. Durch den Zugriff des Leitstandes auf alle Kanäle der Busleitung ist es möglich, den Informationsfluß ständig zu überwachen und die Auswirkungen eingekoppelter Störungen bzw. von Leitungsunterbrechungen aufzuzeichnen, so daß die Ausbildungsergebnisse quantifizierbar sind.

Vorzugsweise sind Einrichtungen (z. B. im Rechner) vorgesehen, um "Fremdgespräche" oder Datensendungen als Störungen einzukoppeln, wie dies in der Realität vorkommt. Alle Störungen können hinsichtlich des Zeitpunktes ihres Auftretens und hinsichtlich ihrer Stärke vom Rechner gesteuert derart statistisch verteilt simuliert werden, daß eine realitätsbezogene Ausbildung ermöglicht wird.

Durch die Ausbildung der Informationsübertragungs-Einrichtungen als Datenbus ist es möglich, entsprechend realen Systemen jedem Übungsstand (entsprechend z. B. einem Gefechtsfahrzeug) mehrere Känale (insbesondere zwei Kanäle) zuzuweisen, über welche gleichzeitig ein Empfang oder wechselweise eine Sendung und ein Empfang erfolgen können. Weiterhin kann dadurch jeder Übungsstand mit dem Leitstand und mit jedem anderen Übungsstand kommunizieren. Die Einkopplung von weiteren Informationen (entsprechend Nachrichten von kampfunterstützenden Einheiten oder anderen Führungssystemen) ist bei einem Bussystem leicht möglich.

Vorzugsweise ist jeder Übungsstand mit mehreren Hör/Sprechgarnituren ausgerüstet, die mittels Schalter entweder auf Teilnahme am externen Sprechverkehr oder auf interne, von außen nicht mithörbare, Kommunikation der Besatzung (Bordsprechnetz) umgeschaltet werden können. Der Begriff "von außen" bedeutet hierbei in erster Linie das Mithören weiterer Übungsstände, nicht aber das Mithören des Leitstandes, wobei die Umschaltung vorzugsweise ebenfalls im Leitstand bzw. vom Rechner protokollierbar ist. Dadurch ist es möglich, den Einfluß bzw. die Wirksamkeit von Zusatzsystemen, z. B. von (Funk) Systemen zur automatischen Standortbestimmung von Gefechtsfahrzeugen eindeutig zu quantifizieren. So z. B. wird durch die Überwachung der Sprechfunk-Aktivität mit und ohne automatisierte Positionsbestimmung festgestellt, wie hoch die durch Positionsdurchsagen gebundenen Informationskapazitäten sind. Gleichzeitig wird hierdurch eine (in der Realität vorkommende) Störung durch die Datenübertragung auf dem Sprechfunkkanal simuliert.

Vorzugsweise ist eine mit dem Bus verbundene Sende- und Empfangsanlage vorgesehen, über welche reale Sprechfunkanlagen (z. B. von mobilen Einheiten) an die Simulationsanlage anschließbar sind.

Die Busleitung ist vorzugsweise als n-kanaliger Audio-Bus, also als Analog-Leitung ausgebildet. Dadurch ist eine kostengünstige Herstellung der Simulationsanlage möglich. Wenn die Busleitung als Digital-Leitung ausgelegt ist und dementsprechend über A/D- bzw. D/A-Wandler an die Übungsstände und den Leitstand angeschlossen ist, so kann zusätzlich ein Zeit-Multiplex-Betrieb erfolgen, der eine Kapazitätserweiterung ermöglicht.

Selbstverständlich ist es möglich, die beschriebene Simulationsanlage auch auf visuelle Systeme auszudehnen.

Im folgenden wird ein Ausführungsbeispiel der Erfindung anhand eines schematisierten Blockschaltbildes näher beschrieben.

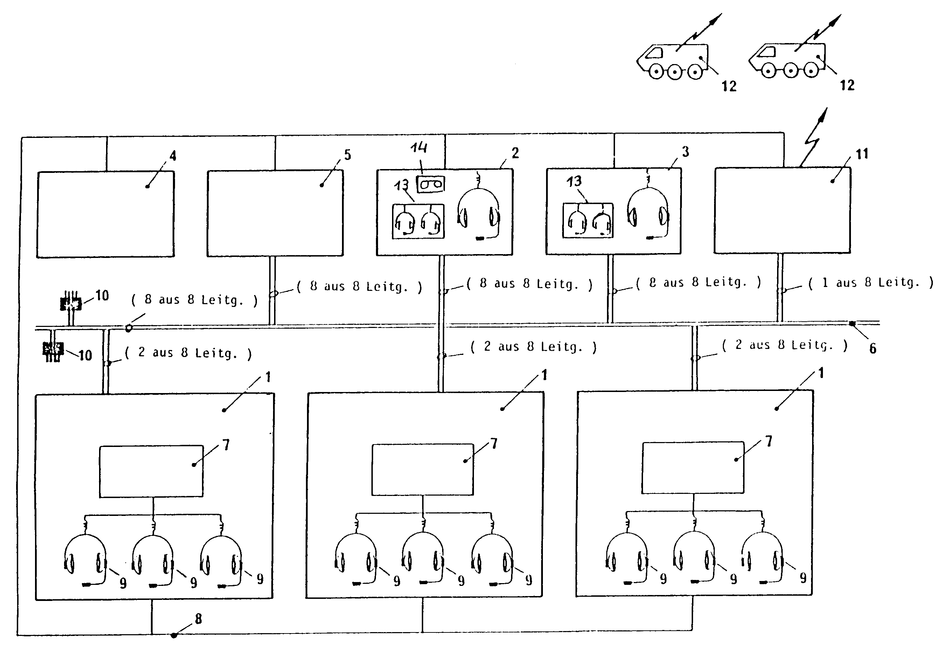

Einer oder mehrere Übungsstände 1 (in der Figur: drei) sind mittels abgeschirmtem n-Kanal-Audiobus 6 untereinander und mit wenigstens einem Leitstand 2 und mit einem Simulationsstand 3 so verkabelt, daß die Leitstände auf mehreren verschiedenen Kanalen unabhängig voneinander mit einzelnen, mit gezielt anwahlbaren mehreren oder mit allen Übungsständen 1 gleichzeitig im Duplexverkehr kommunizieren können. Jeder Übungsstand 1 hat mehrere Ausbildungsplätze, die mit je einer Hör-/Sprechgarnitur 9 ausgerüstet sind (in der Figur: drei pro Übungsstand). Diese Hör-/Sprechgarnituren 9 sind so vernetzt, daß von jedem Ausbildungsplatz mit jedem anderen innerhalb des Übungsständes 1 kommuniziert werden kann, ohne daß die Leitstände oder andere Übungstände mithoren können. Die Hör-/Sprechgarnituren 9 bilden mit ihrem Leitungsnetz, den Verstärkern und der Stromversorgung das Bordsprechnetz (bekannte Technik). Es ist umschaltbar auf externes Senden und Empfangen, wodurch in diesen Funktionen eine simulierte Sprechfunkanlage 7 entsteht. Jeder Übungsstand wird mit n von m insgesamt im Audiobus verfügbaren Kanälen versorgt (in der Figur: mit 2 aus 8), auf denen er gleichzeitig empfangen oder auf je einem senden oder empfangen kann.

Jeder Übungsstand 1 kann mit anderen, gezielt anwählbaren Übungsständen duplex kommunizieren, wobei dieser Sprechverkehr vom Leitstand 2 verfolgt werden kann.

Jeder Leitstand 2 (in der Figur: einer) ist im Prinzip ähnlich mit Hör-/Sprechgarnituren 9 ausgerüstet wie die Übungsstände 1, jedoch in größerer Anzahl entsprechend den Leitungserfordernissen. Der Leitstand hat somit mehrere Arbeitsplätze. Diese sind für interne und für externe Kommunikation vernetzt und umschaltbar, sie werden zusammen mit den erforderlichen Verstärkern, Schaltern und Stromquellen (bekannte Technik) als "erweiterte" simulierte Sprechfunkanlage 13 bezeichnet. Die Leitstände 2 haben Zugriff auf alle im Audiobus verfügbaren Kanäle (in der Figur: 8 aus 8). Dadurch ist es möglich, daß z. B. von einem Arbeitsplatz des Leitstandes 2 von der Besatzung eines Übungsstandes 1 eine Lagemeldung abgefragt und gleichzeitig von einem anderen Arbeitsplatz in 2 ein Befehl durchgegeben wird.

Weiterhin sind im Leitstand 2 Aufzeichnungseinrichtungen 14 vorgesehen, um den Informationsfluß in seiner Gesamtheit zu registrieren, so daß eine nachträgliche Analyse erfolgen kann. Die Registrierung kann sozusagen on-line (ein Tonband läuft mit), oder aber in aufbereiteter bzw. in Daten-reduzierten Formenfolgen (z. B. unter Ausblendung von Sendepausen oder sogar Sendeinhalten).

Die Übungsstände 1 und Leitstände 2 sind zur höheren Trainingseffektivität mit solchen Hör- und Sprechgarnituren 9 sowie sonstigen Bedienelementen ausgestattet, die den im Einsatz zu bedienenden Elementen möglichst gleichen.

Um realitätsnahe Stör- und Ausfallzustände zu simulieren, wird ein Simulatorstand 3 vorgesehen, der ebenfalls mit einer erweiterten simulierten Sprechfunkanlage 13 ausgerüstet ist und der Zugriff auf alle Kanäle des Audiobus hat. Ferner ist ein Steuerrechner 4 vorhanden, der digital über eine Steuerleitung 8 die Zuweisung der Kanäle an die Übungsstände 1 und an den Simulationsstand 3 vornimmt und der während der Übung gemäß Drehbuch programmgesteuert Stör- und Ausfallzustände einspielt. Als Steuerrechner 4 ist ein entsprechend ausgerüsteter PC ausreichend. Ein Aufzeichnungsgerät 5 protokolliert für die spätere Auswertung den Informationsfluß auf jedem Kanal.

Sicherheitsbezogene Forderungen verlangen, den Audio-Simulator störsicher zu machen, so daß durch seinen Betrieb andere Funkdienste nicht gestört werden und umgekehrt diese den Simulatorbetrieb nicht beeinträchtigen, ferner muß er abhörsicher sein. Das erfolgt durch Abschirmung aller abstrahlfähigen Teile (bekannte Technik).

Die anmeldungsgemäße Audio-Simulationsanlage kann um eine Sende- und Empfangsanlage 11 erweitert werden, über die die Kommunikation mit mobilen Übungseinheiten 12 erfolgt. Die Sende- und Empfangsanlage 11 benötigt einen Kanal aus dem Audiobus sie kann vom Rechner 4 über die Steuerleitung 9 zu-und abgeschaltet werden. Bezüglich dieses Kanals ist der Audio-Simulator natürlich nicht abhör- und störsicher.

Jeder Sprechfunkkreis verfügt über mehrere Anschlußstecker 10, so daß die Zahl der Teilnehmer pro Sprechfunkkreis wie auch die Anzahl der Übungsstände 1 leicht erweiterbar ist.

Durch die Umsetzung von analogen auf digitale Signale mittels Analog-Digital-Umsetzer und umgekehrt mittels Digital-Analog-Umsetzer kann der Audio-Simulator an digitale Video-Simulatoren und/oder an entfernter stehende Übungsstände angekoppelt werden, so daß nicht alle Übungs- und Leitstände in unmittelbarer Nähe zueinander aufgebaut sein müssen. Die in den Leit-, Übungs- und Simulationsständen eingesetzten elektronischen und elektrischen Komponenten sind, ebenso wie der Steuerrechner 4 und die Sende- und Empfangsanlage 11, bekannte Technik. Neu ist die Art der Zusammenschaltung zur Erzielung der geforderten Teil- und Gesamtfähigkeiten.

Die mit der Erfindung erzielbaren Vorteile bestehen darin, daß das Personal, welches komplexe Sprechfunknetze bedienen bzw. sicher beherrschen muß, schnell, wirklichkeitsnah, stör- und abhörsicher und vergleichsweise billig geschult und trainiert werden kann. Darüber hinaus können neue Netz- und Gerätekonfigurationen im Hinblick auf neue taktische Anforderungsprofile getestet werden.

### Bezugszeichenliste

- 1: Übungsstand
- 2: Leitstand
- 3: Simulationsstand
- 4: Steuerrechner
- 5: Gerät zur Aufzeichnung und Auswertung
- 6: 8-Kanal-Audiobus
- 7: Simulierte Sprechfunkanlage
- 8: Digitale Steuerleitung (V 24)
- 9: Hör-/Sprechgarnitur
- 10: Anschlußstecker
- 11: Sende- und Empfangsanlage
- 12: Mobile Einheit
- 13: Erweiterte simulierte Sprechfunkanlage
- 14: Aufzeichnungseinrichtung

## Patentansprüche

1. Simulationsanlage für stationäre und mobile Sprechfunknetze, umfassend
mindestens einen Leitstand (2), der mit mindestens einer Hör-/Sprechgarnitur (9) ausgerüstet ist;
mindestens einen Übungsstand (1), der mit mindestens einer Hör-/Sprechgarnitur (9) ausgerüstet ist;
Informationsübertragungs-Einrichtungen (8) zum Übertragen von Informationen zwischen Übungsständen (1) und dem Leitstand (2); gekennzeichnet durch
Überwachungseinrichtungen (4, 5, 14) zur Überwachung des Informationsflusses durch die Informationsübertragungs-Einrichtungen (8).

2. Simulationsanlage nach Anspruch 1, dadurch gekennzeichnet, daß die Informationsübertragungs-Einrichtungen (8) eine Busleitung (6) mit n Kanälen umfassen, daß der Leitstand (2) derart ausgebildet ist, daß ein Zugriff auf jeden der n Kanäle möglich ist, und daß die Übungsstände (1) derart ausgebildet sind, daß ein Zugriff nur auf einen Teil der Kanäle möglich ist, so daß jeder Übungsstand (1) mit jedem anderen Übungsstand direkt unter Überwachung durch den Leitstand (2) kommunizieren kann.

3. Simulationsanlage nach einem der vorhergehenden Ansprüche, gekennzeichnet durch einen Rechner (4), der mit der Busleitung (6) verbindbar und derart ausgebildet ist, daß eine Zuweisung von Kanälen der Informationsübertragungs-Einrichtungen (8) zu Übungsständen (1) und/oder eine Einkopplung von Störungen oder Simulation von Ausfallzuständen ermöglicht wird.

4. Simulationsanlage nach einem der vorhergehenden Ansprüche, dadurch gekennzeichnet, daß wenigstens ein mit einer erweiterten Sprechfunkanlage (13) ausgerüsteter Simulationsstand (3) für das Einspielen von Übungseinlagen und Störfällen sowie für das Einspeisen von Informationen aus anderen Netzen vorgesehen ist.

5. Simulationsanlage nach einem der vorhergehenden Ansprüche, dadurch gekennzeichnet, daß jeder Übungsstand (1) mit einer simulierten Sprechfunkanlage (7) mit Fernmeldegerät so ausgerüstet ist, daß auf mindestens zwei Kanälen gleichzeitig empfangen oder auf je einem Teil der Kanäle empfangen oder gesendet werden kann.

6. Simulationsanlage nach Anspruch 5, dadurch gekennzeichnet, daß die simulierte Sprechfunkanlage (7) in jedem Übungsstand (1) mit wenigstens zwei Hör-/Sprechgarnituren (9) ausgerüstet ist, die mittels Schalter entweder auf Teilnahme am externen (Funksprech-) Verkehr oder auf interne, von außen nicht mithörbare, Kommunikation (Bordsprechnetz) geschaltet werden können.

7. Simulationsanlage nach Anspruch 6, dadurch gekennzeichnet, daß die simulierte Sprechfunkanlage (7) derart ausgebildet ist, daß der interne Sprechverkehr mit Störungen mischbar ist, die von Störungen verschieden sind, welche dem externen (Funk-) Sprechverkehr zumischbar sind.

8. Simulationsanlage nach einem der vorhergehenden Ansprüche, dadurch gekennzeichnet, daß eine Sende- und Empfangsanlage (11) vorgesehen ist, über welche weitere Spechfunkanlagen, insbesondere solche von mobilen Einheiten (12) an die Simulationsanlage anschließbar sind.

9. Simulationsanlage nach Anspruch 2, dadurch gekennzeichnet, daß die Busleitung (6) als n-kanaliger Audio-Bus ausgebildet ist.

10. Simulationsanlage nach einem der vorhergehenden Ansprüche, gekennzeichnet durch Einrichtungen zur Einspeisung von Digitalinformationen in die Informationsübertragungs-Einrichtungen (8).

## Claims

1. A simulation system for stationary and mobile radiotelephony networks, comprising
at least one control station (2) which is equipped with at least one operator's set (9);
at least one training station (1) which is equipped with at least one operator's set (9);
information transmission devices (8) for the transmission of items of information between training stations (1) and the control station (2); characterised by
monitoring devices (4, 5, 14) for monitoring the information flow through the information transmission devices (8).

2. A simulation system as claimed in Claim 1, characterised in that the information transmission devices (8) comprise a bus line (6) with n channels, that the control station (2) is designed such that access is possible to each of the n channels, and that the training stations (1) are designed such that access is possible only to a part of the channels, so that every training station (1) can directly communicate with every other training station with monitoring by the control station (2).

3. A simulation system as claimed in one of the preceding claims, characterised by a computer (4) which can be connected to the bus line (6) and which is designed such that an allocation of channels of the information transmission devices (8) to training stations (1) and/or an input coupling of disturbances or a simulation of breakdown states is facilitated.

4. A simulation system as claimed in one of the preceding claims, characterised in that at least one simulation station (3), equipped with an extended radiotelephony unit (13), is provided for playing training interludes and disturbance situations and for feeding in items of information from other networks.

5. A simulation system as claimed in one of the preceding claims, characterised in that every training station (1) is equipped with a simulated radiotelephony unit (7) with telecommunications device in such manner that reception can take place simultaneously on at least two channels or reception or transmission can take place on a respective part of the channels.

6. A simulation system as claimed in Claim 5, characterised in that the simulated radiotelephony unit (7) in each training station (1) is equipped with at least two operator's sets (9) which, by means of switches, can be switched either to participate in the external (radiotelephony) traffic or to internal communication (on-board interphone network) which cannot be listened-into externally.

7. A simulation system as claimed in Claim 6, characterised in that the simulated radiotelephony unit (7) is designed such that the internal telephony traffic can be mixed with disturbances which differ from disturbances which can be admixed with the external (radio)-telephony traffic.

8. A simulation system as claimed in one of the preceding claims, characterised in that a transmitting- and receiving unit (11) is provided via which further radiotelephony units, in particular those of mobile equipment (12), can be connected to the simulation system.

9. A simulation system as claimed in Claim 2, characterised in that the bus line (6) has the form of a n-channel audio bus.

10. A simulation system as claimed in one of the preceding claims, characterised by devices for feeding items of digital information into the information transmission devices (8).

## Revendications

1. Dispositif de simulation pour réseaux radiotéléphoniques stationnaires et mobiles, comportant un poste de contrôle (2) au moins, équipé d'un poste d'opérateur (9) au moins, un poste d'entraînement (1) au moins, équipé d'un poste d'opérateur (9) au moins, des dispositifs de transfert d'informations (8) pour la transmission d'informations entre des postes d'entraînement (1) et le poste de contrôle (2), caractérisé par des équipements de surveillance (4, 5, 14) pour la surveillance du flux d'informations au travers des dispositifs de transfert (8).

2. Dispositif de simulation suivant la revendication 1, caractérisé en ce que les dispositifs de transfert d'informations (8) comportent un bus (6) à n canaux, en ce que le poste de contrôle (2) a une réalisation telle, qu'un accès est permis à chacun des n canaux, et en ce que les postes d'entraînement (1) ont une réalisation telle, qu'un accès n'est possible qu'à une partie des canaux, de sorte que chaque poste (1) peut communiquer avec chaque autre poste d entraînement, sous la surveillance directe du poste de contrôle (2).

3. Dispositif de simulation suivant l'une quelconque des revendications précédentes, caractérisé par un ordinateur (4), qui peut être raccordé au bus (6) et a une réalisation telle, qu'une assignation de canaux des dispositifs de transfert d'informations (8) aux postes d'entraînement (1), et/ou un couplage de perturbations, ou une simulation d'états de défaillance, sont permis.

4. Dispositif de simulation suivant l'une quelconque des revendications précédentes, caractérisé en ce qu'un poste de simulation (3), au moins, équipé d'une installation radiotéléphonique élargie (13), est prévu pour simuler des situations d'entraînement et incidents, et pour injecter des informations issues d'autres réseaux.

5. Dispositif de simulation suivant l'une quelconque des revendications précédentes, caractérisé en ce que chaque poste d'entraînement (1) est équipé d'une installation radiotéléphonique simulée (7), avec un appareil de télécommunication, de sorte qu'une réception simultanée est permise sur deux canaux au moins, ou qu'il est possible de recevoir ou d'émettre sur une partie des canaux.

6. Dispositif de simulation suivant la revendication 5, caractérisé en ce que l'installation radiotéléphonique simulée (7) est équipée, dans chaque poste d'entraînement (1), de deux postes d'opérateur (9), au moins, qui peuvent être commutés, au moyen d'interrupteurs, soit sur une participation au trafic (radiotéléphonique) externe, soit sur une commmunication interne (réseau téléphonique de bord), sans possibilité d'écoute de l'extérieur.

7. Dispositif de simulation suivant la revendication 6, caractérisé en ce que l'installation radiotéléphonique simulée (7) a une réalisation telle, que le trafic téléphonique interne peut être couplé à des perturbations, différentes de celles qui peuvent être couplées au trafic (radio) téléphonique externe.

8. Dispositif de simulation suivant l'une quelconque des revendications précédentes, caractérisé par une installation d'émission et de réception (11), par l'intermédiaire de laquelle d'autres installations radiotéléphoniques, d'unités mobiles (12), notamment, peuvent être raccordées au dispositif de simulation.

9. Dispositif de simulation suivant la revendication 2, caractérisé en ce que le bus (6) est réalisé sour forme d'audiobus à n canaux.

10. Dispositif de simulation suivant l une quelconque des revendications précédentes, caractérisé par des dispositifs pour l'injection d'informations numériques dans les dispositifs de transfert d'informations (8).
